(19) 

Europäisches
Patentamt
European
Patent Office
Office européen
des brevets

(11)  **EP 4 588 576 A1**

(12)  **EUROPEAN PATENT APPLICATION**
published in accordance with Art. 153(4) EPC

(43)  Date of publication:
**23.07.2025 Bulletin 2025/30**

(21)  Application number: **23864961.0**

(22)  Date of filing: **07.04.2023**

(51)  International Patent Classification (IPC):
**B05D 1/26** (2006.01)    **B05D 1/36** (2006.01)
**B05D 7/24** (2006.01)    **C09D 5/00** (2006.01)
**C09D 5/02** (2006.01)    **C09D 133/00** (2006.01)
**C09D 201/00** (2006.01)

(52)  Cooperative Patent Classification (CPC):
**B05D 1/26; B05D 1/36; B05D 7/24; C09D 5/00;
C09D 5/02; C09D 133/00; C09D 201/00**

(86)  International application number:
**PCT/JP2023/014422**

(87)  International publication number:
**WO 2024/057595 (21.03.2024 Gazette 2024/12)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30)  Priority: **16.09.2022 JP 2022148530**

(71)  Applicant: **Kansai Paint Co., Ltd.
Amagasaki-shi, Hyogo 661-8555 (JP)**

(72)  Inventor: **NAGAI, Akinori
Hiratsuka-shi, Kanagawa 254-8562 (JP)**

(74)  Representative: **Gill Jennings & Every LLP
The Broadgate Tower
20 Primrose Street
London EC2A 2ES (GB)**

(54)  **AQUEOUS COLORED COATING COMPOSITION AND METHOD FOR FORMING MULTILAYER COATING FILM**

(57)  The purpose of the present disclosure is to provide an aqueous colored coating composition that has excellent discharge stability and has excellent drip resistance and image clarity in a coating film to be formed when coating is performed using a liquid discharge head, which controls discharging of the composition by changing the relative distance between a valve body and a discharge port. The aqueous colored coating composition is for coating using the liquid discharge head, which controls discharging of the composition by changing the relative distance between the valve body and the discharge port, the aqueous colored coating composition having a viscosity ($V_1$) of 20 to 100 mPa·s at a temperature of 23°C and a shear rate of 1,000 sec$^{-1}$, and a viscosity ($V_2$) of 5,000 to 40,000 mPa·s at a temperature of 23°C and a shear rate of 0.1 sec$^{-1}$.

EP 4 588 576 A1

**Description**

FIELD

The present disclosure relates to an aqueous colored coating composition and a multilayer coating film forming method which uses the aqueous colored coating composition.

BACKGROUND

A coating composition suitable for an application using a liquid discharge head that controls discharge by changing the relative distance between the valve body and the discharge port, and a multilayer coating film forming method using this coating composition have been studied. For example, Patent Literature 1 discloses a coating composition for precision application that contains a film-forming resin dispersed in an aqueous medium, a crosslinking agent capable of crosslinking with the film-forming resin, a rheology modifier, a colorant, and a swelling solvent that swells the film-forming resin, wherein the solid content of the coating composition is less than 25 weight % based on the total weight of the coating composition (claim 1).

[CITATION LIST]

[PATENT LITERATURE]

[PTL 1] WO 2020/ 232011 A1

SUMMARY

[TECHNICAL PROBLEM]

The coating composition of Patent Literature 1 leaves room for improvement in terms of the discharge stability of the coating composition and sagging, etc., of the coating film to be formed from the coating composition.

Therefore, an object of the present disclosure is to provide an aqueous colored coating composition that has excellent discharge stability when applied using a liquid discharge head that controls a discharge by changing a relative distance between a valve body and a discharge port, and has excellent sagging resistance and vividness in the coating film to be formed.

[SOLUTION TO PROBLEM]

The inventors of the present disclosure have found that an aqueous colored coating composition which is applied using a liquid discharge head that controls a discharge by changing a relative distance between a valve body and a discharge port, wherein the aqueous colored coating composition has a viscosity ($V_1$) of 20 to 100 mPa·s at a temperature of 23°C and a shear rate of 1,000 sec$^{-1}$, and a viscosity ($V_2$) of 5,000 to 40,000 mPa·s at the temperature of 23°C and a shear rate of 0.1 sec$^{-1}$ would solve the problem.

[ADVANTAGEOUS EFFECTS OF INVENTION]

The aqueous colored coating composition of the present disclosure has excellent discharge stability when applied using a liquid discharge head that controls a discharge by changing a relative distance between a valve body and a discharge port, and has excellent sagging resistance and vividness in the coating film to be formed.

DESCRIPTION OF EMBODIMENTS

Specifically, the present disclosure relates to the following aspects.

[Aspect 1]

An aqueous colored coating composition which is applied using a liquid discharge head that controls a discharge by changing a relative distance between a valve body and a discharge port, wherein the aqueous colored coating composition has a viscosity ($V_1$) of 20 to 100 mPa·s at a temperature of 23°C and a shear rate of 1,000 sec$^{-1}$, and a viscosity ($V_2$) of 5,000 to 40,000 ]Pa·s at the temperature of 23°C and a shear rate of 0.1 sec$^{-1}$.

The above-mentioned aqueous colored coating composition has a specified viscosity ($V_1$), and therefore has excellent discharge stability. Incidentally, in a case where an aqueous colored coating composition has inferior discharge stability, the thickness of the coating film to be formed from the aqueous colored coating composition may be non-uniform, and the smoothness, color reproducibility, etc., may be inferior, and the coating film performance may be inferior. In addition, the above-mentioned aqueous colored coating composition has a specified viscosity ($V_2$), and therefore the coating film to be formed from the above-mentioned aqueous colored coating composition has excellent sagging resistance and vividness.

[Aspect 2]

The aqueous colored coating composition according to aspect 1, wherein
a solid content concentration of the aqueous colored coating composition is within a range of 10 to 25 mass %.
The above-mentioned aqueous colored coating composition has a specified solid content concentration, and therefore has excellent discharge stability, and the coating film to be formed from the above-mentioned aqueous colored coating composition has excellent vividness.

[Aspect 3]

The aqueous colored coating composition according to aspect 1 or 2, wherein
tan $\delta$ (a loss elastic modulus/ a storage elastic modulus) at the temperature of 23°C is within a range of 0.25 to 0.80.
The above-mentioned aqueous colored coating composition has a specified tan $\delta$, and therefore has excellent discharge stability, and the coating film to be formed from the above-mentioned aqueous colored coating composition has excellent vividness.

[Aspect 4]

The aqueous colored coating composition according to any one of aspects 1 to 3, wherein under a condition of the temperature of 23°C, a viscosity ($V_3$) of the aqueous colored coating composition after being held for 50 seconds at the shear rate of 0.1 sec$^{-1}$, a viscosity ($V_4$) of the aqueous colored coating composition after changing the shear rate to 1,000 sec$^{-1}$ and being held for 10 seconds, and a viscosity ($V_5$) of the aqueous colored coating composition after changing the shear rate to 0.1 sec$^{-1}$ and being held for 10 seconds, satisfy following formula (1) and formula (2).

$$0.001 < V_4/ V_3 < 0.007 \quad \text{formula (1)}$$

$$30 < V_5/ V_4 < 200 \quad \text{formula (2)}$$

The above-mentioned aqueous colored coating composition satisfies the formula (1), and therefore the viscosity ($V_4$) at the shear rate when discharged from the liquid discharge head is low, and the aqueous colored coating composition can be easily discharged in a controlled size from the liquid discharge head, whereby the discharge stability is excellent. Furthermore, the above-mentioned aqueous colored coating composition satisfies formula (2), and therefore the aqueous colored coating composition attached to the object to be coated has a high viscosity ($V_5$) at a shear rate equivalent to sagging, whereby the coating film to be formed from the above-mentioned aqueous colored coating composition has excellent sagging resistance.

[Aspect 5]

The aqueous colored coating composition according to any one of aspects 1 to 4, wherein
the aqueous colored coating composition contains an acrylic resin emulsion (A) and a viscosity adjuster (B).
The above-mentioned aqueous colored coating composition contains an acrylic resin emulsion (A) and a viscosity adjuster (B), and therefore the coating film to be formed from the above-mentioned aqueous colored coating composition has excellent sagging resistance.

[Aspect 6]

A multilayer coating film forming method comprising:

step 1 of forming a colored coating film on an object to be coated by closely discharging the aqueous colored coating composition according to any one of aspects 1 to 5 to the object to be coated using the liquid discharge head that controls the discharge by changing the relative distance between the valve body and the discharge port; and

step 2 of forming a clear coating film by applying a clear coating composition to the colored coating film.

The above-mentioned multilayer coating film forming method has excellent discharge stability of the aqueous colored coating composition, and the coating film to be formed from the aqueous colored coating composition has excellent sagging resistance.

[Aspect 7]

The multilayer coating film forming method according to aspect 6, wherein
a dry film thickness of the colored coating film is within a range of 1.0 to 15.0 $\mu$m.

According to the above-mentioned multilayer coating film forming method, the colored coating film has a specified dry film thickness, and therefore the multilayer coating film has excellent vividness.

The aqueous colored coating composition of the present disclosure and the multilayer coating film forming method using the aqueous colored coating composition (hereinafter, which may simply be referred to as "the multilayer coating film forming method") are described in detail below.

[Aqueous colored coating composition]

The aqueous colored coating composition of the present disclosure is applied using a liquid discharge head that controls the discharge by changing the relative distance between the valve body and the discharge port.

As the examples of the above-mentioned liquid discharge head that controls the discharge by changing the relative distance between the valve body and the discharge port, for example, those that discharge the aqueous colored coating composition by shortening the relative distance between the valve body and the discharge port, and those that discharge the aqueous colored coating composition by increasing the relative distance between the valve body and the discharge port, etc., may be mentioned.

As the examples of the above-mentioned liquid discharge head, for example, on-demand types (e.g., piezo type, thermal type, valve type) and continuous types, etc., may be mentioned, and the on-demand types, especially the piezo type is preferable. This is because they have excellent discharge property for an aqueous colored coating composition with high-viscosity.

As an example of the above-mentioned piezo type liquid discharge head, for example, the piezo jet dispenser X JET (model compatible with high-viscosity liquids) manufactured by SSI JAPAN corporation may be mentioned.

The above-mentioned aqueous colored coating composition has a viscosity ($V_1$) of 20 to 100 mPa·s, preferably 30 to 60 mPa·s, and more preferably 45 to 60 mPa·s, at a temperature of 23°C and a shear rate of 1,000 sec$^{-1}$. As a result, the above-mentioned aqueous colored coating composition has excellent discharge stability from the liquid discharge head.

The above-mentioned aqueous colored coating composition has a viscosity ($V_2$) of 5,000 to 40,000 mPa·s, preferably 11,000 to 35,000 mPa·s, and more preferably 25,000 to 30,000 mPa·s, at a temperature of 23°C and a shear rate of 0.1 sec$^{-1}$. As a result, the above-mentioned aqueous colored coating composition has excellent discharge stability, and the coating film to be formed from the above-mentioned aqueous colored coating composition has excellent sagging resistance.

The above-mentioned aqueous colored coating composition has tan $\delta$ (a loss elastic modulus/ a storage elastic modulus) of preferably 0.25 to 0.80, more preferably 0.30 to 0.70, and even more preferably 0.35 to 0.70 at a temperature of 23°C. As a result, the above-mentioned aqueous colored coating composition has excellent discharge stability, and the coating film to be formed from the above-mentioned aqueous coating composition has excellent vividness.

Incidentally, the methods of measuring the viscosity ($V_1$), viscosity ($V_2$) and tan $\delta$ will be explained in the Examples.

The above-mentioned aqueous colored coating composition has, under a condition of the temperature of 23°C, a viscosity ($V_3$) after being held for 50 seconds at the shear rate of 0.1 sec$^{-1}$, a viscosity ($V_4$) after changing the shear rate to 1,000 sec$^{-1}$ and being held for 10 seconds, and a viscosity ($V_5$) after changing the shear rate to 0.1 sec$^{-1}$ and being held for 10 seconds, and $V_4/V_3$ is preferably greater than 0.001, more preferably greater than 0.002, and even more preferably greater than 0.003, and is preferably less than 0.007, more preferably less than 0.006, and even more preferably less than 0.005. As a result, the viscosity ($V_4$) at the shear rate when discharged from the liquid discharge head is low, making it easier to discharge the above-mentioned aqueous colored coating composition in a controlled size from the liquid discharge head, and the above-mentioned aqueous colored coating composition has excellent discharge stability.

Furthermore, $V_5/V_4$ is preferably greater than 30, more preferably greater than 50, and even more preferably greater than 60, and is preferably less than 200, more preferably less than 180, and even more preferably less than 160. As a result, the aqueous colored coating composition attached to the object to be coated has a high viscosity ($V_5$) at a shear rate equivalent to sagging, and the coating film to be formed from the above-mentioned aqueous colored coating composition has excellent sagging resistance.

Incidentally, the methods of measuring the viscosity ($V_3$), viscosity ($V_4$), and viscosity ($V_5$) will be explained in the Examples.

The above-mentioned aqueous colored coating composition preferably has a solid content concentration of 10 to 25 mass%, more preferably 10 to 20 mass%, and even more preferably 10 to 16 mass%. As a result, the above-mentioned aqueous colored coating composition has excellent discharge stability, and the coating film to be formed from the above-mentioned aqueous coating composition has excellent vividness.

In this description, the solid content concentration can be calculated by weighing out the object to be measured (for example, an aqueous colored coating composition) into a heat-resistant container such as an aluminum foil cup, etc., spreading the above-mentioned object to be measured on the bottom surface of the container, drying the same at 110°C for one hour, weighing the mass of the components in the object to be measured that remain after drying, and obtaining the ratio of the mass of the component remaining in the object to be measured after drying to the total mass of the object to be measured before drying.

The above-mentioned aqueous colored coating composition is not particularly limited in the composition thereof as long as the same has the above-mentioned viscosity, however, may include resins such as acrylic resins, polyester resins, alkyd resins, polyurethane resins, epoxy resins, silicone resins, and any combinations of the aforementioned.

The above-mentioned resins may be emulsions, and may include, for example, acrylic resin emulsion, polyester resin emulsion, alkyd resin emulsion, polyurethane resin emulsion, epoxy resin emulsion, silicone resin emulsion, and any combinations of the aforementioned, etc. The above-mentioned resins preferably include acrylic resin emulsion (acrylic resin emulsion (A).

The acrylic resin emulsion (A) is an emulsion in which an acrylic resin is emulsified and dispersed in an aqueous medium, and for example, an emulsion produced by emulsion polymerization of a polymerizable unsaturated monomer mixture may be mentioned.

It is particularly desirable for the acrylic resin emulsion (A) to be a core-shell type emulsion consisting of a core portion made of copolymer (I) and a shell portion made of copolymer (II). Furthermore, it is desirable from the viewpoint of improving the appearance and water resistance of the resulting coating film that the copolymer (I) is obtained by copolymerizing a polymerizable unsaturated monomer (a1) having two or more polymerizable unsaturated groups in one molecule with a polymerizable unsaturated monomer (a2) other than the polymerizable unsaturated monomer (a1), and that the copolymer (II) is obtained by copolymerizing a plurality of polymerizable unsaturated monomers (a3).

Examples of the polymerizable unsaturated monomer (a1) include ethylene glycol di(meth)acrylate, triethylene glycol di(meth)acrylate, tetraethylene glycol di(meth)acrylate, 1,6-hexanediol di(meth)acrylate, allyl (meth)acrylate, divinylbenzene, trimethylolpropane triacrylate, methylene bis(meth)acrylamide, ethylene bis(meth)acrylamide, and combinations of the aforementioned.

Incidentally, in this description, "(meth)acrylate" is referred to as acrylate and/ or methacrylate.

The polymerizable unsaturated monomer (a2) other than the polymerizable unsaturated monomer (a1) (hereinafter, which may simply be referred to as "polymerizable unsaturated monomer (a2)") is a monomer having one polymerizable unsaturated group in one molecule that is copolymerizable with the polymerizable unsaturated monomer (a1), and includes compounds having, for example, a vinyl group, a (meth)acryloyl group, etc., as the polymerizable unsaturated group.

Specific examples of the polymerizable unsaturated monomer (a2) include, for example, alkyl or cycloalkyl (meth) acrylates such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl acrylate (product name, manufactured by OSAKA ORGANIC CHEMICAL INDUSTRY LTD.), cyclohexyl (meth) acrylate, methylcyclohexyl (meth) acrylate, t-butylcyclohexyl (meth) acrylate, cyclododecyl (meth) acrylate, etc.; polymerizable unsaturated monomers having an isobornyl group, such as isobornyl (meth) acrylate, etc.; polymerizable unsaturated monomers having an adamantyl group, such as adamantyl (meth) acrylate, etc.; vinyl aromatic compounds such as styrene, α-methylstyrene, and vinyl toluene, etc.; polymerizable unsaturated monomers having an alkoxysilyl group, such as vinyl trimethoxy silane, vinyl triethoxy silane, vinyl tris (2-methoxyethoxy)silane, γ-(meth)acryloyloxy propyl trimethoxy silane, and γ-(meth) acryloyloxy propyl triethoxy silane, etc.; perfluoroalkyl (meth)acrylates such as perfluorobutylethyl (meth)acrylate and perfluorooctylethyl (meth)acrylate, etc.; polymerizable unsaturated monomers having a fluorinated alkyl group such as fluoroolefin, etc.; monomers having a photopolymerizable functional group such as a maleimide group, etc.; vinyl compounds such as N-vinylpyrrolidone, ethylene, butadiene, chloroprene, vinyl propionate, and vinyl acetate, etc.; carboxyl group-containing polymerizable unsaturated monomers such as (meth)acrylic acid, maleic acid, crotonic acid, and β-carboxyethyl acrylate, etc.; nitrogen-containing polymerizable unsaturated monomers such as adducts, etc., of (meth)acrylonitrile, (meth)acrylamide, N,N-dimethylaminoethyl (meth)acrylate, N,N-dimethylaminopropyl (meth)acrylamide, glycidyl (meth)acrylate and amines; hydroxyl group-containing polymerizable unsaturated monomers such as monoesters of (meth)acrylic acid and dihydric alcohols having 2 to 8 carbon atoms such as 2-hydroxyethyl (meth)acrylate, 2-hydroxypropyl (meth)acrylate, 3-hydroxypropyl (meth)acrylate, and 4-hydroxybutyl (meth)acrylate, etc.; ε-caprolactone-modified products of monoesters of (meth)acrylic acid and dihydric alcohols having 2 to 8 carbon atoms, N-hydroxymethyl(meth)acrylamide, allyl alcohol, and (meth)acrylates having a polyoxyethylene chain the molecular terminal of which is a hydroxyl group; epoxy group-containing polymerizable unsaturated monomers such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether; (meth)acrylates having a polyoxyethylene chain the molecular terminal of which is an alkoxy group; sulfonic acid group-containing polymerizable unsaturated monomers such as 2-acrylamido-2-methylpropanesulfonic acid, allylsulfonic acid, sodium styrenesulfonate, sulfoethyl methacrylate, and sodium salts or ammonium salts thereof, etc.; phosphate group-containing polymerizable unsaturated monomers such as 2-acryloyloxyethyl acid phosphate, 2-methacryloyloxyethyl acid phosphate, 2-acryloyloxypropyl acid phosphate, and 2-methacryloyloxypropyl acid phosphate, etc.; monomers having an ultraviolet absorbing functional group, such as 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, and 2-(2'-hydroxy-5'-methacryloyloxyethylphenyl)-2H-benzotriazole, etc.; monomers having ultraviolet stability such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine, etc.; carbonyl group-containing monomer compounds such as acrolein, diacetone acrylamide, diacetone methacrylamide, acetoacetoxyethyl methacrylate, formyl styrol, and vinyl alkyl ketones having 4 to 7 carbon atoms (for example, vinyl methyl ketone, vinyl ethyl ketone, vinyl butyl ketone), etc., and the combination of the aforementioned.

When producing the copolymer (I), the polymerizable unsaturated monomer (a1) is preferably within the range of 0.1 to 20 mass%, more preferably 0.2 to 10 mass%, and even more preferably 0.7 to 4 mass%, based on the total mass of the polymerizable unsaturated monomer (a1) and the polymerizable unsaturated monomer (a2), and the polymerizable unsaturated monomer (a2) is preferably within the range of 80 to 99.9 mass%, more preferably 90 to 99.8 mass%, and even more preferably 96 to 99.3 mass%, based on the total mass of the polymerizable unsaturated monomer (a1) and the polymerizable unsaturated monomer (a2), from the viewpoints of stability during production and improvement of the water resistance, weather resistance, etc., of the resulting coating film.

As the plurality of polymerizable unsaturated monomers (a3) which forms the shell portion of the copolymer (II), those listed in the polymerizable unsaturated monomers (a2) may be appropriately used, and from the viewpoint of ensuring the stability of the obtained core-shell type emulsion in an aqueous medium, it is preferable that the shell portion of the copolymer (II) contains a carboxyl group-containing monomer as the polymerizable unsaturated monomer (a3). As the above-mentioned carboxyl group-containing monomer, acrylic acid and/or methacrylic acid are particularly preferable. From the viewpoint of the stability of the emulsion resin in an aqueous medium and the water resistance of the resulting coating film, etc., the amount of the carboxyl group-containing monomer is preferably within the range of 1 to 40 mass%, more preferably 6 to 25 mass%, and even more preferably 7 to 19 mass%, based on the total mass of the plurality of polymerizable unsaturated monomers (a3), which is also suitable from the viewpoint of improving storage stability and water resistance of the resulting coating film.

The plurality of polymerizable unsaturated monomers (a3) which forms the shell portion of the copolymer (II) preferably contain the above-mentioned hydroxyl group-containing monomers as at least a part of the components in order to ensure the stability of the resulting emulsion resin in an aqueous medium. As the hydroxyl group-containing monomer, 2-hydroxyethyl (meth)acrylate, 2-hydroxypropyl (meth)acrylate, 3-hydroxypropyl (meth)acrylate, and 4-hydroxybutyl (meth)acrylate are particularly preferable. From the viewpoints of the stability of the emulsion resin in an aqueous medium and the water resistance of the resulting coating film, etc., the amount of the hydroxyl group-containing monomer is generally within the range of 1 to 40 mass%, preferably 3 to 25 mass%, and more preferably 4 to 20 mass%, based on the total mass of the plurality of polymerizable unsaturated monomers (a3), which is also suitable from the storage stability and water resistance of the resulting coating film.

The core-shell type emulsion may be obtained, for example, by emulsion polymerizing a monomer mixture (1) containing a polymerizable unsaturated monomer (a1) and a polymerizable unsaturated monomer (a2) in the above-mentioned ratio to produce a copolymer (I), followed by adding a monomer mixture (2) containing the plurality of polymerizable unsaturated monomers (a3), and further emulsion polymerizing the resulting mixture. The emulsion polymerization of the monomer mixture (1) may be carried out by a method known per se, for example, by using a polymerization initiator under the presence of an emulsifier. The monomer mixture (2) may contain components such as a polymerization initiator, a chain transfer agent, a reducing agent, and an emulsifier, etc., as desired.

The core-shell type emulsion is a core/ shell type emulsion in which the core is a copolymer (I) formed from a monomer mixture (1) containing a polymerizable unsaturated monomer (a1) and a polymerizable unsaturated monomer (a2), and the shell is a copolymer (II) formed from a monomer mixture (2) containing the plurality of polymerizable unsaturated monomers (a3). In the core-shell type emulsion, the ratio of the copolymer (I) to the copolymer (II) is generally preferably within the range of 5/ 95 to 95/ 5, more preferably 30/ 70 to 92/ 8, and even more preferably 40/ 60 to 90/ 10 in terms of the solid content mass ratio of the copolymer (I)/ the copolymer (II), from the viewpoint of the sagging resistance, etc., of the resulting coating film.

As the acrylic resin emulsion (A), a single-layer type acrylic resin emulsion obtained by emulsion polymerization in one stage may also be used.

The acrylic resin emulsion (A) obtained as described above has a resin acid value within the range of preferably 5 to 90 mgKOH/ g, more preferably 8 to 60 mgKOH/ g, and even more preferably 10 to 50 mgKOH/ g from the viewpoints of storage stability, water resistance of the resulting coating film, etc. Furthermore, the acrylic resin emulsion (A) has a resin hydroxyl value within the range of preferably 1 to 100 mgKOH/ g, more preferably 2 to 90 mgKOH/ g, and even more preferably 5 to 80 mgKOH/ g from the viewpoints of water resistance of the resulting coating film, etc.

In a case where the aqueous colored coating composition of the present disclosure contains the above-mentioned acrylic resin emulsion, the content of the acrylic resin emulsion (A) is preferably within the range of 15 to 60 mass%, more preferably within the range of 20 to 55 mass%, and even more preferably within the range of 25 to 45 mass%, based on the resin solid content in the aqueous colored coating composition.

The above-mentioned aqueous colored coating composition may further contain a curing agent. Examples of the above-mentioned curing agents include amino resins, polyisocyanate compounds, blocked polyisocyanate compounds, epoxy group-containing compounds, carboxyl group-containing compounds, carbodiimide group-containing compounds, hydrazide group-containing compounds, and semicarbazide group-containing compounds. Among the aforementioned, amino resins, polyisocyanate compounds, and blocked polyisocyanate compounds that can react with hydroxyl groups, and carbodiimide group-containing compounds that can react with carboxyl groups are preferable.

The above-mentioned aqueous colored coating composition preferably further contains a viscosity adjuster (B). Examples of the viscosity adjuster (B) include polyacrylic acid-based viscosity adjusters, silica-based fine powders, mineral-based viscosity adjusters, barium sulfate fine powders, polyamide-based viscosity adjusters, organic resin fine particle viscosity adjusters, diurea-based viscosity adjusters, urethane association-type viscosity adjusters, and cellulose-based viscosity adjusters, etc., and polyacrylic acid-based viscosity adjusters are preferable.

In a case where the aqueous colored coating composition of the present disclosure contains a viscosity adjuster (B), the content of the viscosity adjuster (B) is preferably within the range of 0.1 to 10 mass%, more preferably within the range of 0.5 to 8 mass%, and even more preferably within the range of 1.0 to 6.0 mass%, based on the resin solid content in the aqueous colored coating composition.

The above-mentioned aqueous colored coating composition may contain various additives for coating such as color pigments, luster pigments, dyes, thickeners, curing catalysts, ultraviolet absorbers, light stabilizers, defoamers, plasticizers, surface conditioners, and anti-settling agents, as necessary.

[Multilayer coating film forming method]

The multilayer coating film forming method of the present disclosure includes the following steps.

Step 1: Forming a colored coating film on an object to be coated by closely discharging the prescribed aqueous colored coating composition to the above-mentioned object to be coated using the liquid discharge head that controls the discharge by changing the relative distance between the valve body and the discharge port.

Step 2: Forming a clear coating film by applying a clear coating composition to the above-mentioned colored coating film.

The liquid discharge head that controls the discharge by changing the relative distance between the valve body and the discharge port is as described in the "aqueous colored coating composition" section.

The dry film thickness of the colored coating film to be formed by the aqueous colored coating composition varies depending on the use of the object to be coated, etc., and is not particularly limited, however is preferably 1.0 to 15.0 μm, more preferably 3.0 to 15.0 μm, and even more preferably 5.0 to 15.0 μm. This is from the viewpoint of vividness of the multilayer coating film.

The above-mentioned objects to be coated include, for example, outer panels of automobile bodies such as passenger cars, trucks, motorcycles, and buses; automobile parts; and outer panels of household electrical appliances such as mobile phones and audio equipment, etc., and the outer panels of automobile bodies and automobile parts are preferable.

The material of the above-mentioned object to be coated is not particularly limited, and examples thereof include metal materials such as iron, aluminum, brass, copper, tinplate, stainless steel, zinc-plated steel, zinc alloy (Zn-Al, Zn-Ni, Zn-Fe, etc.)-plated steel, etc.; plastic materials such as resins such as polyethylene resin, polypropylene resin, acrylonitrile-butadiene-styrene (ABS) resin, polyamide resin, acrylic resin, vinylidene chloride resin, polycarbonate resin, polyurethane resin, epoxy resin, etc., various fiber reinforced plastics (FRP), etc.; inorganic materials such as glass, cement, concrete, etc.; wood; fibrous materials such as paper, cloth, etc.

The surface of the above-mentioned object to be coated may be a metal surface of an automobile body outer panel, an automobile part, a household electrical appliance, or a metal substrate such as a steel plate that constitutes the aforementioned, which has been subjected to a surface treatment such as phosphate treatment, chromate treatment, complex oxide treatment, etc.

A coating film may be further formed on the object, which may or may not have been surface-treated. For example, the object to be coated which is a substrate may be surface-treated as necessary, and a basecoat coating film may be formed thereon, or an intermediate coating film may be formed on the basecoat coating film. For example, in a case where the object to be coated is an automobile body, the above-mentioned basecoat coating film and intermediate coating film may be formed using known coatings for basecoat coating and intermediate coating that are normally used in application to automobile bodies.

The above-mentioned closely discharging is not particularly limited as long as the same is the distance between the discharge port and the object to be coated at which the above-mentioned liquid discharge head is generally used, and is preferably 0.1 to 50.0 mm, more preferably 0.5 to 30 mm, and even more preferably 1.0 to 10.0 mm.

In a facility equipped with the above-mentioned liquid discharge head, the frequency at which the aqueous colored coating composition is discharged from the valve body is preferably within the range of 10 to 10,000 Hz, more preferably within the range of 30 to 5,000 Hz, and even more preferably within the range of 50 to 3,000 Hz, from the viewpoints of discharge stability and the prevention of unevenness in the coating film to be formed.

In a facility equipped with the above-mentioned liquid discharge head, the supply pressure of supplying the aqueous colored coating composition to the liquid discharge head is preferably within the range of 0.001 to 10 MPa, more preferably within the range of 0.005 to 5.0 MPa, and even more preferably within the range of 0.01 to 1.0 MPa, from the viewpoint of supply stability, etc.

In a facility equipped with the above-mentioned liquid discharge head, the scanning speed of the liquid discharge head is preferably within the range of 10 to 1,500 mm/ s, more preferably within the range of 50 to 1,000 mm/ s, and even more preferably within the range of 100 to 800 mm/ s, from the viewpoint of discharge stability and the prevention of unevenness in the coating film to be formed, etc.

In a facility equipped with the above-mentioned liquid discharge head, the pitch at which the liquid discharge head is scanned is preferably within the range of 0.001 to 1.0 mm, more preferably within the range of 0.005 to 1.0 mm, and even more preferably within the range of 0.01 to 1.0 mm, from the standpoint of the application efficiency, etc.

As the above-mentioned clear coating composition, a curable clear coating composition (for example, a thermosetting clear coating composition, a photocurable clear coating composition) and a non-curable clear coating composition may be mentioned. The above-mentioned thermosetting clear coating composition includes, for example, an organic solvent-based thermosetting coating composition, an aqueous thermosetting coating composition, a powder thermosetting coating composition, and the like, which contain a base resin having a crosslinkable functional group and a curing agent.

The above-mentioned crosslinkable functional group of the base resin includes, for example, a carboxyl group, a hydroxyl group, an epoxy group, a silanol group, and the like. The types of base resin include, for example, an acrylic resin, a polyester resin, an alkyd resin, a urethane resin, an epoxy resin, a fluorine resin, and the like. The curing agent includes, for example, a polyisocyanate compound, a blocked polyisocyanate compound, a melamine resin, a urea resin, a carboxyl group-containing compound, a carboxyl group-containing resin, an epoxy group-containing resin, an epoxy group-containing compound, and the like.

Preferable combinations of the base resin/ the curing agent for the above-mentioned clear coating composition are hydroxyl group-containing resin/ polyisocyanate compound, carboxyl-containing resin/ epoxy-containing resin, hydroxyl group-containing resin/ blocked polyisocyanate compound, hydroxyl group-containing resin/ melamine resin, etc., and more preferably hydroxyl group-containing resin/ polyisocyanate compound.

Furthermore, the above-mentioned clear coating composition may be a one-component coating or a multi-component coating such as a two-component urethane resin coating.

The above-mentioned clear coating composition may contain color pigments, luster pigments, dyes, etc., as necessary, to the extent that transparency is not impaired, and may further contain extender pigments, ultraviolet absorbers, light stabilizers, defoamers, thickeners, rust inhibitors, surface conditioners, etc., as appropriate.

The application method of the above-mentioned clear coating composition is not particularly limited, however for example, a wet coating film may be formed by an application method such as air spray application, airless spray application, rotary atomization application, curtain coat application, etc. In these application methods, electrostatic application may be performed as necessary. Among the aforementioned, the air spray application and the rotary atomization application are particularly preferable. The application amount of the clear coating composition is usually an amount that results in a cured film thickness of 10 to 70 $\mu$m, preferably 20 to 50 $\mu$m.

EXAMPLES

The present disclosure will be explained in more detail below with reference to production examples, examples, and comparative examples. However, the present disclosure is not limited to the same. In each example, "parts" and "%" are based on mass unless otherwise specified. Furthermore, the thickness of the coating film is based on the cured coating film.

[Production of acrylic resin emulsion (A)]

[Production Example 1]

In a reaction vessel equipped with a thermometer, a thermostat, a stirrer, a reflux condenser, a nitrogen inlet tube, and a dropping device, 130 parts of deionized water and 0.52 parts of "AQUALON KH-10" (product name, manufactured by DKS Co. Ltd., emulsifier, active component of 97%) were charged, stirred and mixed in a nitrogen stream, and the temperature was raised to 80°C. Next, 1% of the total amount of the monomer emulsion (1) below and 5.3 parts of a 6% ammonium persulfate aqueous solution were introduced into the reaction vessel and kept at 80°C for 15 minutes. Thereafter, the remaining monomer emulsion (1) was dropped into the reaction vessel held at the same temperature for 3 hours, and aging was carried out for 1 hour after the dropping had been completed. Thereafter, the following monomer emulsion (2) was dropped for 1 hour, and after aging for 1 hour, 40 parts of a 5% dimethylethanolamine aqueous solution was gradually added to the reaction vessel while cooling down the same to 30°C, and the mixture was discharged while being filtered through a 100-mesh nylon cloth, whereby an acrylic resin emulsion (A1) with a solid content concentration of 30% was obtained. The obtained acrylic resin emulsion (A1) had an acid value of 33 mgKOH/ g and a hydroxyl value of 25 mgKOH/ g.
Monomer emulsion (1): 42 parts of deionized water, 0.72 parts of "AQUALON KH-10", 2.1 parts of methylene bisacrylamide, 2.8 parts of styrene, 16.1 parts of methyl methacrylate, 28 parts of ethyl acrylate, and 21 parts of n-butyl acrylate were mixed and stirred, whereby the monomer emulsion (1) was obtained.
Monomer emulsion (2): 18 parts of deionized water, 0.31 parts of "AQUALON KH-10", 0.03 parts of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate, and 9 parts of n-butyl acrylate were mixed and stirred, whereby the monomer emulsion (2) was obtained.

[Production Example 2]

In a reaction vessel equipped with a thermometer, a thermostat, a stirrer, a reflux condenser, a nitrogen inlet tube, and a dropping device, 130 parts of deionized water and 0.52 parts of "AQUALON KH-10" (product name, manufactured by DKS Co. Ltd., emulsifier, active component of 97%) were charged, stirred and mixed in a nitrogen stream, and the temperature was raised to 80°C. Next, 1% of the total amount of the monomer emulsion (3) below and 5.3 parts of a 6% ammonium persulfate aqueous solution were introduced into the reaction vessel and kept at 80°C for 15 minutes. Thereafter, the remaining monomer emulsion (3) was dropped into the reaction vessel held at the same temperature for 3 hours, and aging was carried out for 1 hour after the dropping had been completed. Thereafter, the following monomer emulsion (4) was dropped for 1 hour, and after aging for 1 hour, 40 parts of a 5% dimethylethanolamine aqueous solution was gradually added to the reaction vessel while cooling down the same to 30°C, and the mixture was discharged while being filtered through a 100-mesh nylon cloth, whereby an acrylic resin emulsion (A2) with a solid content concentration of 30% was obtained. The obtained acrylic resin emulsion (A2) had an acid value of 13 mgKOH/ g and a hydroxyl value of 65 mgKOH/ g.
Monomer emulsion (3): 46.2 parts of deionized water, 0.79 parts of "AQUALON KH-10", 7.7 parts of styrene, 16.94 parts of methyl methacrylate, 7.7 parts of n-butyl acrylate, 30.8 parts of n-butyl methacrylate, 11.55 parts of 2-hydroxyethyl methacrylate, and 2.31 parts of ethylene glycol dimethacrylate were mixed and stirred, whereby the monomer emulsion (3) was obtained.
Monomer emulsion (4): 13.8 parts of deionized water, 0.24 parts of "AQUALON KH-10", 0.03 parts of ammonium persulfate, 2.3 parts of styrene, 6.9 parts of methyl methacrylate, 4.6 parts of ethyl acrylate, 3.68 parts of n-butyl acrylate, 3.45 parts of 2-hydroxyethyl methacrylate, and 2.07 parts of methacrylic acid were mixed and stirred, whereby the monomer emulsion (4) was obtained.

[Production of hydroxyl group-containing acrylic resin (C)]

[Production Example 3]

In a reaction vessel equipped with a thermometer, a thermostat, a stirrer, a reflux condenser, a nitrogen inlet tube, and a dropping device, 35 parts of propylene glycol monopropyl ether was charged, the temperature was raised to 85°C, and thereafter, a mixture of 30 parts of methyl methacrylate, 20 parts of 2-ethylhexyl acrylate, 29 parts of n-butyl acrylate, 15 parts of 2-hydroxyethyl acrylate, 6 parts of acrylic acid, 15 parts of propylene glycol monopropyl ether, and 2.3 parts of 2,2'-azobis(2,4-dimethylvaleronitrile) was dropped for 4 hours, and aging was carried out for 1 hour after the dropping had been completed. Thereafter, a mixture of 10 parts propylene glycol monopropyl ether and 1 part of 2,2'-azobis(2,4-dimethylvaleronitrile) was further dropped for 1 hour, and aging was carried out for 1 hour after the dropping had been completed. Furthermore, 7.4 parts of diethanolamine and 13 parts of propylene glycol monopropyl ether were added, whereby a hydroxyl group-containing acrylic resin (C1) solution with a solid content concentration of 55% was obtained. The obtained hydroxyl group-containing acrylic resin (C1) had an acid value of 47 mgKOH/ g, a hydroxyl value of 72 mgKOH/ g, and a weight average molecular weight of 58,000.

[Production of polyester resin (D)]

[Production Example 4]

In a reaction vessel equipped with a thermometer, a stirrer, a heating device, and a distillation column, 118 parts of 1,6-hexanediol and 102 parts of adipic acid were mixed, a small amount of xylene for reflux was added, the mixture was gradually heated to 250°C and held at the same temperature for 5 hours to carry out an esterification reaction while dehydrating, whereby a polyester resin was obtained. 102.5 parts of ethylene glycol monobutyl ether and 2.5 parts of orthophosphoric acid were added per 100 parts of the polyester resin, and the mixture was held at 100°C for 3 hours, whereby a polyester resin (D1) solution with a solid content concentration of 50% was obtained. The number average molecular weight of the polyester resin (D1) was 4,000.

[Production of pigment dispersion]

[Production Example 5]

In a container equipped with a stirrer, 9.1 parts (solid content of 5 parts) of the hydroxyl group-containing acrylic resin (C1) solution obtained in Production Example 3, 4 parts of "Carbon MA-100" (product name, manufactured by Mitsubishi Chemical Corporation, carbon black), and 50 parts of deionized water were placed and mixed uniformly to form a mixed solution, to which 2-ethyl-1-hexanol was added to adjust the pH to 7.5. Thereafter, the mixed solution with the adjusted pH was placed in a wide-mouth glass bottle, glass beads with a diameter of approximately 1.3 mm φ were added as a dispersion medium, the bottle was sealed, and the mixed solution was dispersed for 4 hours using a paint shaker, whereby a pigment dispersion (P-1) was obtained.

[Production Example 6]

In a container equipped with a stirrer, 9.1 parts (solid content of 5 parts) of the hydroxyl group-containing acrylic resin (C1) solution obtained in Production Example 3, 7 parts of "Chlorinated copper cyanine blue G-314" (product name, manufactured by Sanyo Color Works, LTD., phthalocyanine blue pigment), and 50 parts of deionized water were placed and mixed uniformly to form a mixed solution, to which 2-ethyl-1-hexanol was added to adjust the pH to 7.5. Thereafter, the mixed solution with the adjusted pH was placed in a wide-mouth glass bottle, glass beads with a diameter of approximately 1.3 mm φ were added as a dispersion medium, the bottle was sealed, and the mixed solution was dispersed for 4 hours using a paint shaker, whereby a pigment dispersion (P-2) was obtained.

[Production Example 7]

In a container equipped with a stirrer, 9.1 parts (solid content of 5 parts) of the hydroxyl group-containing acrylic resin (C1) solution obtained in Production Example 3, 10 parts of "PERRIND MAROON179 229-6440" (product name, manufactured by SUNCHEMICAL Co.,Ltd, organic perylene pigment), and 50 parts of deionized water were placed and mixed uniformly to form a mixed solution, to which 2-ethyl-1-hexanol was added to adjust the pH to 7.5. Thereafter, the mixed solution with the adjusted pH was placed in a wide-mouth glass bottle, glass beads with a diameter of approximately 1.3 mm φ were added as a dispersion medium, the bottle was sealed, and the mixed solution was dispersed for 4 hours using a paint shaker, whereby a pigment dispersion (P-3) was obtained.

[Production Example 8]

In a container equipped with a stirrer, 9.1 parts (solid content of 5 parts) of the hydroxyl group-containing acrylic resin (C1) solution obtained in Production Example 3, 10 parts of "YELLOW 2GLMA" (product name, manufactured by Dominion Colour Corporation, bismuth vanadate-based yellow pigment), and 50 parts of deionized water were placed and mixed uniformly to form a mixed solution, to which 2-ethyl-1-hexanol was added to adjust the pH to 7.5. Thereafter, the mixed solution with the adjusted pH was placed in a wide-mouth glass bottle, glass beads with a diameter of approximately 1.3 mm φ were added as a dispersion medium, the bottle was sealed, and the mixed solution was dispersed for 4 hours using a paint shaker, whereby a pigment dispersion (P-4) was obtained.

[Preparation of aqueous colored coating composition]

[Example 1]

In a stirring mixing vessel, 63.1 parts (solid content of 9 parts) of pigment dispersion (P-1) obtained in Production Example 5, 116.7 parts (solid content of 35.0 parts) of acrylic resin emulsion (A1) obtained in Production Example 1, 16.1 parts (solid content of 4.5 parts) of "Primal ASE-60" (product name, manufactured by Rohm and Haas Co., Ltd., polyacrylic acid-based thickener, solid content of 28%), 30 parts (solid content of 15 parts) of hydroxyl group-containing polyester resin (D1) solution obtained in Production Example 4, 42.9 parts (solid content of 15 parts) of "U-coat UX-8100" (product name, manufactured by SANYO CHEMICAL INDUSTRIES, LTD., urethane emulsion, solid content concentration of 35%), 30 parts (solid content of 30 parts) of "Cymel 350" (product name, manufactured by Mitsui Cytec Co., Ltd., methyl etherified melamine resin, weight average molecular weight of 550, solid content of 100%), and 1.1 parts (solid content of 1 part) of "TINUVIN 384-2" (product name, manufactured by BASF, benzotriazole-based ultraviolet absorber, solid content concentration of 95%) was mixed uniformly, and 2-(dimethylamino)ethanol and deionized water were added, whereby an aqueous colored coating composition No. 1 with a pH of 8.0 and a coating solid content concentration of 15% was obtained.

[Examples 2 to 20 and Comparative Examples 1 to 4]

Aqueous colored coating compositions No. 2 to 24 were obtained in the same manner as in Example 1, except that the blending compositions in Example 1 were changed to those as shown in Table 1 below.
Incidentally, the values shown in Table 1 indicate the solid content.

[Measurement of coating properties]

The coating properties of the aqueous colored coating compositions No. 1 to 24 obtained in Examples 1 to 20 and Comparative Examples 1 to 4 were measured according to the following methods. The evaluation results are also shown in Table 1.

[Viscosity ($V_1$) and Viscosity ($V_2$)]

At a temperature of 23°C, the shear rate was changed from 0.0001 sec$^{-1}$ to 10,000 sec$^{-1}$, and the viscosity ($V_1$) at a temperature of 23°C and a shear rate of 1,000 sec$^{-1}$, and the viscosity ($V_2$) at a temperature of 23°C and a shear rate of 0.1 sec$^{-1}$ were measured using a cone and plate type viscosity meter "HAAKE RheoStress RS150" (product name, manufactured by HAAKE, diameter of 35 mm, cone and plate inclined at 2°).

[tan δ]

At a temperature of 23°C, shear stress was 1.0 Pa, and frequency was 0.1 Hz, the tan δ (a loss elastic modulus/ a storage elastic modulus) at a temperature of 23°C was measured using a "HAAKE RheoStress RS 150" (product name, manufactured by HAAKE, diameter of 35 mm, cone and plate inclined at 2°).

[Viscosity ($V_3$), Viscosity ($V_4$), and Viscosity ($V_5$)]

First, the shear rate was set to 0.1 sec$^{-1}$, and the viscosity ($V_3$) was measured after being held for 50 seconds. Next, the shear rate was changed to 1000 sec$^{-1}$, and the viscosity ($V_4$) was measured after being held for 10 seconds. Next, the shear rate was changed to 0.1 sec$^{-1}$, and the viscosity ($V_5$) was measured after being held for 10 seconds. All measurements were performed at 23°C using a "HAAKE RheoStress RS 150" (product name, manufactured by HAAKE, diameter of 35 mm, cone and plate inclined at 2°).

[Discharge stability test and sagging resistance test]

Discharge stability test and sagging resistance test were performed on the aqueous colored coating compositions No. 1 to No. 24 obtained in Examples 1 to 20 and Comparative Examples 1 to 4.

[Discharge stability test]

Each of the aqueous colored coating compositions No. 1 to No. 24 was filled into an "X JET" (product name, manufactured by SSI JAPAN corporation, high viscosity micro-piezo jet dispenser, discharge port diameter of 100 $\mu$m). Next, each of the aqueous colored coating compositions No. 1 to No. 24 was applied linearly (10 cm long) to the object to be coated under the conditions of frequency of 350 Hz, supply pressure of 0.03 MPa, speed of 230 mm/ s, and the distance between the discharge port and the object to be coated of 10 mm. The linear object was observed for distortion and evaluated according to the following criteria. "E" and "G" are acceptable. The evaluation results are shown in Table 2.
E (standing for excellent): There was no distortion in the linear object.
G (standing for good): There was partial distortion in the linear object, however of no practical problem.
A (standing for average): There was overall distortion in the linear object, which is a practical problem.
P (standing for poor): The linear object could not be formed.

[Sagging resistance test]

[Preparation of an object to be coated for sagging resistance test]

On a cold-rolled steel plate with a size of 11 cm $\times$ 45 cm that had been subjected to zinc phosphate conversion treatment, "Elecron 9400HB" (product name, manufactured by Kansai Paint Co.,Ltd., an amine-modified epoxy resin-based cationic resin using a blocked polyisocyanate compound as a curing agent) was electrodeposition-coated to a dry film thickness of 20 $\mu$m, and the plate was cured by heating at 170°C for 30 minutes, whereby an electrodeposition-coated steel plate was obtained. Next, 21 punch holes each with a diameter of 5 mm were punched in a row at 2 cm intervals in a portion 3 cm apart from the end of the lengthy side of the obtained electrodeposition-coated steel plate, whereby an object to be coated for sagging resistance test was prepared.

[Preparation of an application plate for sagging resistance test]

The aqueous colored coating compositions No. 1 to No. 24 were filled into "X JET" (product name, manufactured by SSI JAPAN corporation, high viscosity micro-piezo jet dispenser, discharge port diameter of 100 $\mu$m). Then, the aqueous colored coating compositions were applied to the above-mentioned object to be coated for sagging resistance test with a film thickness gradient so as to obtain a film thickness of approximately 10 $\mu$m to 40 $\mu$m in the longitudinal direction under the conditions of a frequency of 350 Hz, a supply pressure of 0.03 MPa, a distance between the discharge port and the object to be coated of 10 mm, 27°C, and a relative humidity of 50%, and the application plate was stood almost vertically and left for 3 minutes, and then preheated at 80°C for 3 minutes. Next, after being left for 7 minutes, the same was heated at 140°C for 30 minutes to cure the coating film, whereby the application plate for sagging resistance test was prepared.
For the obtained application plates for sagging resistance test, the film thickness at the position of the thinnest punch hole among the punch holes where sagging of the coating film was observed at 5 mm or more apart from the bottom end of the punch hole [sagging limit film thickness ($\mu$m)] was measured and evaluated. The thicker the sagging limit film thickness, the better the sagging resistance. "E" and "G" are acceptable. The evaluation results are shown in Table 1.
E (standing for excellent): The sagging limit film thickness is 20 $\mu$m or more.
G (standing for good): The sagging limit film thickness is 15 $\mu$m or more and less than 20 $\mu$m.
A (standing for average): The sagging limit film thickness is 10 $\mu$m or more and less than 15 $\mu$m.
P (standing for poor): The sagging limit film thickness is less than 10 $\mu$m.

[Table 1]

Table 1

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Aqueous colored coating composition No. | | 1 | 2 | 3 | 4 | 5 | 6 | 7 | 8 | 9 | 10 | 11 | 12 |
| Pigment dispersion | Hydroxyl group-containing acrylic resin (C1) | 5 | 5 | 5 | 5 | 5 | 5 | 5 | 5 | 5 | 5 | 5 | 5 |
| | "Carbon MA-100" | 4 | 4 | 4 | 4 | 4 | 4 | 4 | 4 | 4 | 4 | 4 | 4 |
| | "Chlorinated copper cyanine blue G-314" | | | | | | | | | | | | |
| | "PERRIND MAROON179 229-6440" | | | | | | | | | | | | |
| | "YELLOW 2GLMA" | | | | | | | | | | | | |
| Pigment dispersion name | | P-1 | P-1 | P-1 | P-1 | P-1 | P-1 | P-1 | P-1 | P-1 | P-1 | P-1 | P-1 |
| Acrylic resin emulsion (A1) | | 35 | 35 | 35 | 35 | 35 | 35 | 35 | 35 | 35 | 35 | 35 | 35 |
| Viscosity adjuster (B) | "Primal ASE-60" | 4.5 | 3.7 | 0.4 | 0 | 6.5 | 8.3 | 5.5 | 6 | | | 4 | 3.8 |
| | "UH-756VF" (Note 1) | | | | | | | | | 2 | | | |
| | "UH-752VF" (Note 2) | | | | | | | | | | 2 | | |
| | "RHEOCRYSTAl-2SX" (Note 3) | | | | | | | | | | | | |
| Hydroxyl group-containing polyester resin (D1) | | 15 | 15 | 15 | 15 | 15 | 15 | 15 | 15 | 15 | 15 | 15 | 15 |
| "U-coat UX-8100" | | 15 | 15 | 15 | 15 | 15 | 15 | 15 | 15 | 15 | 15 | 15 | 15 |
| Curing agent | "Cymel 350" | 30 | 30 | 30 | 30 | 30 | 30 | 30 | 30 | 30 | 30 | 30 | 30 |
| Ultraviolet absorber | "TINUVIN 384-2" | 1 | 1 | 1 | 1 | 1 | 1 | 1 | 1 | | 1 | 1 | 1 |
| Coating solid content concentration [%] | | 15 | 15 | 23 | 27 | 11 | 8 | 15 | 15 | 20 | 17 | 15 | 15 |

| | | 53 | 44 | 47 | 58 | 61 | 58 | 82 | 93 | 39 | 26 | 58 | 49 |
|---|---|---|---|---|---|---|---|---|---|---|---|---|---|---|
| Coating properties | Viscosity ($V_1$) [mPa·s] | 53 | 44 | 47 | 58 | 61 | 58 | 82 | 93 | 39 | 26 | 58 | 49 |
| | Viscosity ($V_2$) [mPa·s] | 12660 | 6000 | 19000 | 21000 | 12000 | 9000 | 26000 | 34600 | 20600 | 38500 | 8140 | 7490 |
| | tan δ (loss elastic modulus/storage elastic modulus) | 0.4 | 0.5 | 0.5 | 0.8 | 0.4 | 0.4 | 0.3 | 0.2 | 0.8 | 0.7 | 0.5 | 0.5 |
| | Viscosity ($V_3$) [mPa·s] | 12200 | 6360 | 17000 | 20000 | 12700 | 9610 | 24300 | 33300 | 18700 | 25500 | 7900 | 7270 |
| | Viscosity ($V_4$) [mPa·s] | 50 | 44 | 43 | 52 | 59 | 53 | 76 | 87 | 33 | 22.2 | 55 | 48 |
| | Viscosity ($V_5$) [mPa·s] | 4080 | 1370 | 2060 | 9750 | 6660 | 5870 | 11500 | 17100 | 2950 | 1770 | 2120 | 1430 |
| | ($V_4$)/ ($V_3$) | 0.004 | 0.007 | 0.003 | 0.003 | 0.005 | 0.006 | 0.003 | 0.003 | 0.002 | 0.001 | 0.007 | 0.007 |
| | ($V_5$)/ ($V_4$) | 82 | 31 | 48 | 188 | 113 | 111 | 151 | 197 | 89 | 80 | 39 | 30 |
| Evaluation | Discharge stability | E | E | E | G | E | G | E | G | G | G | E | E |
| | Sagging resistance | E | G | G | E | E | E | E | E | E | G | G | G |

[Table 2]

| Table 1 (Continuance) | | Examples | | | | | | | | Comparative Examples | | | |
|---|---|---|---|---|---|---|---|---|---|---|---|---|---|
| | | 13 | 14 | 15 | 16 | 17 | 18 | 19 | 20 | 1 | 2 | 3 | 4 |
| Aqueous colored coating composition No. | | 13 | 14 | 15 | 16 | 17 | 18 | 19 | 20 | 21 | 22 | 23 | 24 |
| Pigment dispersion | Hydroxyl group-containing acrylic resin (C1) | 5 | 5 | 5 | 5 | 5 | 5 | 5 | 5 | 5 | 5 | 5 | 5 |
| | "Carbon MA-100" | 4 | 4 | | | | 4 | 4 | 4 | 4 | 4 | 4 | 4 |
| | "Chlorinated copper cyanine blue G-314" | | | 7 | | | | | | | | | |
| | "PERRIND MAROON179 229-6440" | | | | 10 | | | | | | | | |
| | "YELLOW 2GLMA" | | | | | 10 | | | | | | | |
| Pigment dispersion name | | P-1 | P-1 | P-2 | P-3 | P-4 | P-1 | P-1 | P-1 | P-1 | P-1 | P-1 | P-1 |
| Acrylic resin emulsion (A1) | | 35 | | 35 | 35 | 35 | 35 | 35 | 35 | 35 | 35 | 35 | 35 |
| Viscosity adjuster (B) | "Primal ASE-60" | 6.2 | 5.9 | 4.5 | 4.5 | 4.5 | 4.5 | | | 6.5 | 3.5 | 2.5 | 7 |
| | "UH-756VF" (Note 1) | | | | | | | | | | | | |
| | "UH-752VF" (Note 2) | | | | | | | 1.2 | | | | | |
| | "RHEOCRYSTA I-2SX" (Note 3) | | | | | | | | 3.5 | | | | |
| Hydroxyl group-containing polyester resin (D1) | | 15 | 30 | 15 | 15 | 15 | 15 | 15 | 15 | 15 | 15 | 15 | 15 |
| "U-coat UX-8100" | | 15 | 35 | 15 | 15 | 15 | 15 | 15 | 15 | 15 | 15 | 15 | 15 |
| Curing agent | "Cymel 350" | 30 | 30 | 30 | 30 | 30 | 30 | 30 | 30 | 30 | 30 | 30 | 30 |
| Ultraviolet absorber | "TINUVIN 384-2" | 1 | 1 | 1 | 1 | 1 | | 1 | 1 | 1 | 1 | 1 | 1 |
| Coating solid content concentration [%] | | 15 | 15 | 15 | 15 | 15 | 15 | 15 | 20 | 20 | 15 | 15 | 15 |

| Table 1 (Continuance) | | | Examples | | | | | | | | Comparative Examples | | | |
|---|---|---|---|---|---|---|---|---|---|---|---|---|---|---|
| | | | 13 | 14 | 15 | 16 | 17 | 18 | 19 | 20 | 1 | 2 | 3 | 4 |
| Coating properties | | Viscosity ($V_1$) [mPa·s] | 100 | 73 | 67 | 72 | 69 | 75 | 33 | 32 | 110 | 33 | 19 | 120 |
| | | Viscosity ($V_2$) [mPa·s] | 39000 | 6800 | 10840 | 11800 | 11000 | 13100 | 29810 | 15000 | 45000 | 3000 | 270 | 52200 |
| | | tan $\delta$ (loss elastic modulus/storage elastic modulus) | 0.2 | 0.4 | 0.4 | 0.4 | 0.4 | 0.4 | 0.4 | 0.5 | 0.2 | 0.9 | 2.9 | 0.2 |
| | | Viscosity ($V_3$) [mPa·s] | 39000 | 6900 | 10620 | 11450 | 10660 | 12850 | 25100 | 14100 | 40800 | 2240 | 240 | 49100 |
| | | Viscosity ($V_4$) [mPa·s] | 95 | 68 | 60 | 65 | 61 | 66 | 27 | 28 | 100 | 27 | 17 | 110 |
| | | Viscosity ($V_5$) [mPa·s] | 26000 | 4300 | 3770 | 4010 | 3890 | 4200 | 1880 | 7800 | 27500 | 460 | 260 | 3550 |
| | | ($V_4$)/ ($V_3$) | 0.002 | 0.010 | 0.006 | 0.006 | 0.006 | 0.005 | 0.001 | 0.002 | 0.002 | 0.012 | 0.071 | 0.002 |
| | | ($V_5$)/ ($V_4$) | 274 | 63 | 63 | 62 | 64 | 64 | 70 | 279 | 275 | 17 | 15 | 32 |
| Evaluation | | Discharge stability | G | G | E | E | E | E | G | G | P | G | A | P |
| | | Sagging resistance | E | G | E | E | E | E | E | E | E | P | P | E |
| (Note 1) "UH-756VF": Product name, manufactured by ADEKA Corporation, urethane association type viscosity adjuster, solid content concentration of 32%, (Note 2) "UH-752": Product name, manufactured by ADEKA Corporation, urethane association type viscosity adjuster, solid content concentration of 28%, (Note 3) "RHEOCRYSTA I-2SX": Product name, manufactured by DKS Co. Ltd., cellulose nanofiber, viscosity adjuster, solid content concentration of 2%. | | | | | | | | | | | | | | |

EP 4 588 576 A1

[Preparation of clear coating composition (Z-1)]

[Production example 9]

In a stirring mixing vessel, 233 parts (solid content of 70 parts) of acrylic resin emulsion (A2) obtained in Production Example 2 and 78.9 parts (solid content 30 parts) of "Bayhydur VPLS2310" (product name, manufactured by Sumika Bayer Urethane Co., Ltd., blocked polyisocyanate compound, solid content concentration of 38%) were uniformly mixed, and deionized water was added so that the coating solid content concentration became 40%, and the mixture was stirred, whereby a one-component aqueous clear coating composition (Z-1) was obtained.

[Preparation of object to be coated for vividness test]

[Preparation of object to be coated for vividness test (O-1)]

The surface of a black polypropylene plate with 100 mm length × 100 mm width × 2 mm thickness was wiped with gauze soaked in petroleum benzine for degrease treatment, and thereafter, "ASCAREX #2850" (product name, manufactured by Kansai Paint Co.,Ltd., polyolefin-containing aqueous primer coating) was applied with a hand spray gun to a cured coating film of 15 $\mu$m, left for 5 minutes, and preheated at 80°C for 3 minutes, whereby an object to be coated for vividness test (O-1) was prepared.

[Preparation of object to be coated for vividness test (O-2)]

"Elecron 9400HB" (product name, manufactured by Kansai Paint Co.,Ltd., an amine-modified epoxy resin-based cationic resin using a blocked polyisocyanate compound as a curing agent) was electrodeposition-coated to a film thickness of 20 $\mu$m on a zinc phosphate-treated galvannealed steel sheet, and cured by heating at 170°C for 30 minutes, whereby an electrodeposited coating film was formed. Next, "WP-522H" (product name, manufactured by Kansai Paint Co.,Ltd., polyester resin-based aqueous intermediate coating) was applied to the electrodeposited coating film with a hand spray gun to a cured coating film of 15 $\mu$m, left for 5 minutes, and preheated at 80°C for 3 minutes, whereby an object to be coated for vividness test (O-2) was prepared.

[Preparation of object to be coated for vividness test (O-3)]

The surface of a black polypropylene plate with 100 mm length × 100 mm width × 2 mm thickness was wiped with gauze soaked in petroleum benzine for degrease treatment, and thereafter, "ASCAREX #2850" (product name, manufactured by Kansai Paint Co.,Ltd., polyolefin-containing aqueous primer coating) was applied with a hand spray gun to a cured coating film of 15 $\mu$m, left for 5 minutes, and preheated at 80°C for 3 minutes, whereby an uncured primer coating film was formed. "RETAN WB ECO EV Base" (product name, manufactured by Kansai Paint Co.,Ltd., aqueous colored basecoat coating) was applied to the uncured primer coating film to a dry film thickness of 15 $\mu$m, and the film was left at room temperature for 5 minutes, and then preheated at 80°C for 3 minutes, whereby an uncured basecoat coating film was formed. Next, the clear coating composition (Z-1) obtained in Production Example 9 was applied to the uncured basecoat coating film with a hand spray gun to a cured film thickness of 35 $\mu$m, and the film was left for 7 minutes, then heated at 120°C for 30 minutes to cure the basecoat coating film and the clear coating film, whereby an object to be coated for vividness test (O-3) was prepared.

[Preparation of object to be coated for vividness test (O-4)]

The surface of a black polypropylene plate with 100 mm length × 100 mm width × 2 mm thickness was wiped with gauze soaked in petroleum benzine for degrease treatment, and thereafter, "ASCAREX #2850" (product name, manufactured by Kansai Paint Co.,Ltd., polyolefin-containing aqueous primer coating) was applied with a hand spray gun to a cured coating film of 15 $\mu$m, left for 5 minutes, and preheated at 80°C for 3 minutes, whereby an uncured primer coating film was formed. "RETAN WB ECO EV Base" (product name, manufactured by Kansai Paint Co.,Ltd., aqueous colored basecoat coating) was applied to the uncured primer coating film to a dry film thickness of 15 $\mu$m, and the film was left at room temperature for 5 minutes, and then preheated at 80°C for 3 minutes, whereby an uncured basecoat coating film was formed. Next, "RETAN WB ECO EV Clear" (product name, manufactured by Kansai Paint Co.,Ltd., two-component aqueous clear coating) was applied to the uncured basecoat coating film with a hand spray gun to a cured film thickness of 35 $\mu$m, and the film was left for 7 minutes, then heated at 80°C for 30 minutes to cure the basecoat coating film and the clear coating film, whereby an object to be coated for vividness test (O-4) was prepared.

[Preparation of object to be coated for vividness test (O-5)]

"Elecron 9400HB" (product name, manufactured by Kansai Paint Co.,Ltd., an amine-modified epoxy resin-based cationic resin using a blocked polyisocyanate compound as a curing agent) was electrodeposition-coated to a film thickness of 20 $\mu$m on a zinc phosphate-treated galvannealed steel sheet, and cured by heating at 170°C for 30 minutes, whereby an electrodeposited coating film was formed. Next, "WP-522H" (product name, manufactured by Kansai Paint Co.,Ltd., polyester resin-based aqueous intermediate coating) was applied to the electrodeposited coating film with a hand spray gun to a cured coating film of 15 $\mu$m, left for 5 minutes, and preheated at 80°C for 3 minutes, whereby an uncured intermediate coating was formed. "RETAN WB ECO EV Base" (product name, manufactured by Kansai Paint Co.,Ltd., aqueous colored basecoat coating) was applied to the uncured intermediate coating film to a dry film thickness of 15 $\mu$m, and the film was left at room temperature for 5 minutes, and then preheated at 80°C for 3 minutes, whereby an uncured basecoat coating film was formed. Next, "RETAN WB ECO EV Clear" (product name, manufactured by Kansai Paint Co.,Ltd., two-component aqueous clear coating) was applied to the uncured basecoat coating film with a hand spray gun to a cured film thickness of 35 $\mu$m, and the film was left for 7 minutes, then heated at 80°C for 30 minutes to cure the basecoat coating film and the clear coating film, whereby an object to be coated for vividness test (O-5) was prepared.

[Example 21]

[Preparation of an application plate for vividness test]

[Preparation of an application plate for vividness test (S1)]

The aqueous colored coating composition No. 1 was filled into "X JET" (product name, manufactured by SSI JAPAN corporation, high viscosity micro-piezo jet dispenser, discharge port diameter of 100 $\mu$m), and was applied to the object to be coated for vividness test (O-1) to a dry film thickness of 10 $\mu$m under the conditions of a frequency of 350 Hz, a supply pressure of 0.03 MPa, a distance between the discharge port and the object to be coated of 10 mm, 27°C, and a relative humidity of 50%, and the film was left at room temperature for 5 minutes, and then preheated at 80°C for 3 minutes, whereby an uncured colored coating film was formed. Next, the clear coating composition (Z-1) obtained in Production Example 9 was applied to the uncured colored coating film with a hand spray gun to a cured film thickness of 35 $\mu$m, and the film was left for 7 minutes, then heated at 120°C for 30 minutes to cure the colored coating film and the clear coating film, whereby an application plate for vividness test (S1-1) was prepared.

[Preparation of an application plate for vividness test (S2)]

An application plate for vividness test (S2-1) was prepared according to "Preparation of an application plate for vividness test (S1)", except that the object to be coated for vividness test (O-1) was changed to the object to be coated for vividness test (O-2).

[Preparation of an application plate for vividness test (S3)]

An application plate for vividness test (S3-1) was prepared according to "Preparation of an application plate for vividness test (S1)", except that the object to be coated for vividness test (O-1) was changed to the object to be coated for vividness test (O-3).

[Preparation of an application plate for vividness test (S4)]

The aqueous colored coating composition No. 1 was filled into "X JET" (product name, manufactured by SSI JAPAN corporation, high viscosity micro-piezo jet dispenser, discharge port diameter of 100 $\mu$m), and was applied to the object to be coated for vividness test (O-4) to a dry film thickness of 10 $\mu$m under the conditions of a frequency of 350 Hz, a supply pressure of 0.03 MPa, a distance between the discharge port and the object to be coated of 10 mm, 27°C, and a relative humidity of 50%, and the film was left at room temperature for 5 minutes, and then preheated at 80°C for 3 minutes, whereby an uncured colored coating film was formed. Next, "RETAN WB ECO EV Clear" (product name, manufactured by Kansai Paint Co.,Ltd., two-component aqueous clear coating) (Z-2) was applied to the uncured colored coating film with a hand spray gun to a cured film thickness of 35 $\mu$m, and the film was left for 7 minutes, then heated at 120°C for 30 minutes to cure the colored coating film and the clear coating film, whereby an application plate for vividness test (S4-1) was prepared.

[Preparation of an application plate for vividness test (S5)]

An application plate for vividness test (S5-1) was prepared according to "Preparation of an application plate for vividness test (S4)", except that the object to be coated for vividness test (O-4) was changed to the object to be coated for vividness test (O-5).

[Examples 22 to 44 and Comparative Examples 5 to 8]

Application plates for vividness test (S1-2) to (S1-28), (S2-2) to (S2-28), (S3-2) to (S3-28), (S4-2) to (S4-28) and (S5-2) to (S5-28) were prepared in the same manner as Example 21, except that the combination of the aqueous colored coating composition and the film thickness of Example 21 is changed to those shown in Table 2.

[Vividness test]

The vividness of the application plates for vividness test obtained in Examples 21 to 44 and Comparative Examples 5 to 8 was evaluated based on the Short Wave (SW) value measured using a "Wave Scan" (product name, manufactured by BYK Gardner). The smaller the SW value, the higher the vividness of the coating surface, with "E" and "G" being acceptable. The evaluation results are shown in Table 2.
E (standing for excellent): Sw value is less than 25.
G (standing for good): Sw value is 25 or more and less than 30.
A (standing for average): Sw value is 30 or more and less than 40.
P (standing for poor): Sw value is 40 or more.

[Table 3]

Table 2

| | | | Examples | | | | | | | | | | | | | |
|---|---|---|---|---|---|---|---|---|---|---|---|---|---|---|---|---|
| | | | 21 | 22 | 23 | 24 | 25 | 26 | 27 | 28 | 29 | 30 | 31 | 32 | 33 | 34 |
| Aqueous colored coating composition No. | | | 1 | 2 | 3 | 4 | 5 | 6 | 7 | 8 | 9 | 10 | 11 | 12 | 13 | 14 |
| Film thickness (µm) | | | 10 | 10 | 10 | 10 | 10 | 10 | 10 | 10 | 10 | 10 | 10 | 10 | 10 | 10 |
| Evaluation | Application plate for vividness test (S1) (PP/ During baking) | Application plate name for vividness test | (S1-1) | (S1-2) | (S1-3) | (S1-4) | (S1-5) | (S1-6) | (S1-7) | (S1-8) | (S1-9) | (S1-10) | (S1-11) | (S1-12) | (S1-13) | (S1-14) |
| | | Vividness | E | G | G | G | E | G | G | G | E | E | G | G | G | G |
| | Application plate for vividness test (S2) (ED/ During baking) | Application plate name for vividness test | (S2-1) | (S2-2) | (S2-3) | (S2-4) | (S2-5) | (S2-6) | (S2-7) | (S2-8) | (S2-9) | (S2-10) | (S2-11) | (S2-12) | (S2-13) | (S2-14) |
| | | Vividness | E | G | G | G | E | G | G | G | E | E | G | G | G | G |
| | Application plate for vividness test (S3) (PP/ During baking /BC/Aqueous 1K) | Application plate name for vividness test | (S3-1) | (S3-2) | (S3-3) | (S3-4) | (S3-5) | (S3-6) | (S3-7) | (S3-8) | (S3-9) | (S3-10) | (S3-11) | (S3-12) | (S3-13) | (S3-14) |
| | | Vividness | E | G | G | G | E | G | G | G | G | G | G | G | G | G |
| | Application plate for vividness test (S4) (PP/ During baking / BC/ Aqueous 2K) | Application plate name for vividness test | (S4-1) | (S4-2) | (S4-3) | (S4-4) | (S4-5) | (S4-6) | (S4-7) | (S4-8) | (S4-9) | (S4-10) | (S4-11) | (S4-12) | (S4-13) | (S4-14) |
| | | Vividness | E | E | E | G | E | G | G | G | E | E | E | E | G | G |
| | Application plate for vividness test (S5) | Application plate name for vividness test | (S5-1) | (S5-2) | (S5-3) | (S5-4) | (S5-5) | (S5-6) | (S5-7) | (S5-8) | (S5-9) | (S5-10) | (S5-11) | (S5-12) | (S5-13) | (S5-14) |
| | | Vividness | E | E | E | G | E | G | G | G | E | E | E | E | G | G |

| (ED/ During baking / BC/ Aqueous 2K) | | | | | | | | | | | | | |
|---|---|---|---|---|---|---|---|---|---|---|---|---|---|

| | | | Examples | | | | | | | | | | Comparative Examples | | | |
|---|---|---|---|---|---|---|---|---|---|---|---|---|---|---|---|---|
| | | | 35 | 36 | 37 | 38 | 39 | 40 | 41 | 42 | 43 | 44 | 5 | 6 | 7 | 8 |
| Aqueous colored coating composition No. | | | 1 | 1 | 1 | 1 | 15 | 16 | 17 | 18 | 19 | 20 | 21 | 22 | 23 | 24 |
| Film thickness (μm) | | | 1 | 0.5 | 13 | 18 | 10 | 10 | 10 | 10 | 10 | 10 | 10 | 10 | 10 | 10 |
| Evaluation | Application plate for vividness test (S1) (PP/ During baking) | Application plate name for vividness test | (S1-15) | (S1-16) | (S1-17) | (S1-18) | (S1-19) | (S1-20) | (S1-21) | (S1-22) | (S1-23) | (S1-24) | (S1-25) | (S1-26) | (S1-27) | (S1-28) |
| | | Vividness | E | G | E | G | E | E | E | E | E | G | G | A | P | A |
| | Application plate for vividness test (S2) (ED/ During baking) | Application plate name for vividness test | (S2-15) | (S2-16) | (S2-17) | (S2-18) | (S2-19) | (S2-20) | (S2-21) | (S2-22) | (S2-23) | (S2-24) | (S2-25) | (S2-26) | (S2-27) | (S2-28) |
| | | Vividness | E | G | E | G | E | E | E | E | E | G | G | A | P | A |
| | Application plate for vividness test (S3) (PP/ During baking /BC/Aqueous 1K) | Application plate name for vividness test | (S3-15) | (S3-16) | (S3-17) | (S3-18) | (S3-19) | (S3-20) | (S3-21) | (S3-22) | (S3-23) | (S3-24) | (S3-25) | (S3-26) | (S3-27) | (S3-28) |
| | | Vividness | E | G | E | G | G | G | G | G | G | G | A | A | P | P |
| | Application plate for vividness test (S4) (PP/ During baking / BC/ Aqueous 2K) | Application plate name for vividness test | (S4-15) | (S4-16) | (S4-17) | (S4-18) | (S4-19) | (S4-20) | (S4-21) | (S4-22) | (S4-23) | (S4-24) | (S4-25) | (S4-26) | (S4-27) | (S4-28) |
| | | Vividness | E | G | E | G | E | E | E | E | E | G | G | A | P | A |

| Application plate for vividness test (S5) (ED/ During baking / BC/ Aqueous 2K) | Application plate name for vividness test | (S5-15) | (S5-16) | (S5-17) | (S5-18) | (S5-19) | (S5-20) | (S5-21) | (S5-22) | (S5-23) | (S5-24) | (S5-25) | (S5-26) | (S5-27) | (S5-28) |
|---|---|---|---|---|---|---|---|---|---|---|---|---|---|---|---|
| | Vividness | E | G | E | G | E | E | E | E | E | G | G | A | P | A |

**Claims**

1. An aqueous colored coating composition which is applied using a liquid discharge head that controls a discharge by changing a relative distance between a valve body and a discharge port, wherein the aqueous colored coating composition has a viscosity ($V_1$) of 20 to 100 mPa·s at a temperature of 23°C and a shear rate of 1,000 sec$^{-1}$, and a viscosity ($V_2$) of 5,000 to 40,000 mPa·s at the temperature of 23°C and a shear rate of 0.1 sec$^{-1}$.

2. The aqueous colored coating composition according to claim 1, wherein a solid content concentration of the aqueous colored coating composition is within a range of 10 to 25 mass %.

3. The aqueous colored coating composition according to claim 1 or 2, wherein tan $\delta$ (a loss elastic modulus/ a storage elastic modulus) at the temperature of 23°C is within a range of 0.25 to 0.80.

4. The aqueous colored coating composition according to any one of claims 1 to 3, wherein under a condition of the temperature of 23°C, a viscosity ($V_3$) of the aqueous colored coating composition after being held for 50 seconds at the shear rate of 0.1 sec$^{-1}$, a viscosity ($V_4$) of the aqueous colored coating composition after changing the shear rate to 1,000 sec$^{-1}$ and being held for 10 seconds, and a viscosity ($V_5$) of the aqueous colored coating composition after changing the shear rate to 0.1 sec$^{-1}$ and being held for 10 seconds, satisfy following formula (1) and formula (2).

$$0.001 < V_4/\ V_3 < 0.007 \quad \text{formula (1)}$$

$$30 < V_5/\ V_4 < 200 \quad \text{formula (2)}$$

5. The aqueous colored coating composition according to any one of claims 1 to 4, wherein the aqueous colored coating composition contains an acrylic resin emulsion (A) and a viscosity adjuster (B).

6. A multilayer coating film forming method comprising:

    step 1 of forming a colored coating film on an object to be coated by closely discharging the aqueous colored coating composition according to any one of claims 1 to 5 to the object to be coated using the liquid discharge head that controls the discharge by changing the relative distance between the valve body and the discharge port; and
    step 2 of forming a clear coating film by applying a clear coating composition to the colored coating film.

7. The multilayer coating film forming method according to claim 6, wherein a dry film thickness of the colored coating film is within a range of 1.0 to 15.0 $\mu$m.

## INTERNATIONAL SEARCH REPORT

International application No.

**PCT/JP2023/014422**

### A. CLASSIFICATION OF SUBJECT MATTER

**B05D 1/26**(2006.01)i; **B05D 1/36**(2006.01)i; **B05D 7/24**(2006.01)i; **C09D 5/00**(2006.01)i; **C09D 5/02**(2006.01)i; **C09D 133/00**(2006.01)i; **C09D 201/00**(2006.01)i

FI: C09D201/00; B05D1/36 Z; B05D1/26 Z; B05D7/24 301K; B05D7/24 303A; B05D7/24 302P; C09D5/00 Z; C09D5/02; C09D133/00

According to International Patent Classification (IPC) or to both national classification and IPC

### B. FIELDS SEARCHED

Minimum documentation searched (classification system followed by classification symbols)

B05D1/26; B05D1/36; B05D7/24; C09D1/00-201/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/232011 A1 (PPG INDUSTRIES OHIO, INC.) 19 November 2020 (2020-11-19) claim 1, paragraphs [0072], [0084], [0089], [00202]-[00208], tables 1-3, examples 3, 8 | 1-7 |
| Y | paragraphs [0072], [00207], table 2, examples | 1-7 |
| Y | JP 2022-128131 A (NIPPON PAINT AUTOMOTIVE COATINGS CO., LTD.) 01 September 2022 (2022-09-01) claim 1, paragraphs [0036], [0092], [0107]-[0120], table 1, examples 1, 3 | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT
### Information on patent family members

International application No.

**PCT/JP2023/014422**

| Patent document cited in search report | Publication date (day/month/year) | Patent family member(s) | Publication date (day/month/year) |
|---|---|---|---|
| WO 2020/232011 A1 | 19 November 2020 | (Family: none) | |
| JP 2022-128131 A | 01 September 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020232011 A1